# EUROPÄISCHE PATENTANMELDUNG

(11) **EP 4 556 173 A1**
(43) Veröffentlichungstag der Anmeldung: **21.05.2025**
(21) Anmeldenummer: 23210678.1
(22) Anmeldetag: 17.11.2023
(51) Int. Cl.: B25J 5/00, B25J 5/04, B25J 9/16, B25J 11/00, B25J 9/08

(54) **MULTIFUNKTIONALER BAUROBOTER**

(71) Anmelder: Hilti Aktiengesellschaft, 9494 Schaan (LI)
(72) Erfinder: Brugger, Peter, 6800 Feldkirch (AT); Zanona, Julia, 6800 Feldkirch (AT)
(74) Vertreter: Hilti Aktiengesellschaft Corporate Intellectual Property

(57) **Zusammenfassung**

Die Erfindung betrifft einen **Bauroboter (10)** zur Ausführung wenigstens einer Art von Bauaufgaben, beispielsweise Oberflächenbehandlungen, Schneidarbeiten, Bohrarbeiten, Abbrucharbeiten, insbesondere im Hochbau und / oder im Tiefbau. Er kann besonders wirtschaftlich in vielfältigen Arten hergestellt werden und Bauarbeiten wirtschaftlich ausführen, wenn er eine Fahrplattform (20), einen Roboterarm (12) und ein Funktionsmodul (22) umfasst, wobei sich zumindest ein Teil des Funktionsmoduls (22) relativ zur Fahrplattform (20) verschieben und / oder verschwenken lässt.

## Beschreibung

Die Erfindung geht aus von einem Bauroboter zur Ausführung wenigstens einer Art von Bauaufgaben. Der Bauroboter umfasst eine Fahrplattform und einen Roboterarm.

Derartige Bauroboter kommen immer häufiger zum Einsatz auf Baustellen, um Bauarbeiter von gefährlichen oder stark belastenden Arbeiten, beispielsweise Arbeiten an Decken, zu entlasten. Derartige Bauroboter sind grundsätzlich jedoch teuer in der Herstellung und der Wartung, wodurch ihre Einsatzmöglichkeiten derzeit noch beschränkt sind.

Aufgabe der vorliegenden Erfindung ist es daher, einen vielseitig einsetzbaren, einfach anpassbaren und in der Herstellung und Nutzung kostengünstigen Bauroboter anzubieten.

Gelöst wird die Aufgabe durch einen Bauroboter zur Ausführung wenigstens einer Art von Bauaufgaben, umfassend eine Fahrplattform, einen Roboterarm und ein Funktionsmodul, wobei sich zumindest ein Teil des Funktionsmoduls relativ zur Fahrplattform verschieben und / oder verschwenken lässt. In dem Funktionsmodul können alle oder zumindest einige der für eine Art von Bauaufgaben spezifischen Komponenten platziert sein. Dann kann ein und dieselbe Fahrplattform zusammen mit unterschiedlichen Funktionsmodulen verwendet werden. Damit können unterschiedliche Arten von Baurobotern auf Basis der gleichen Fahrplattform aufgebaut werden. Hierdurch können Skaleneffekte genutzt werden. Die Herstellung kann besonders günstig erfolgen. Durch unterschiedliche Funktionsmodule kann ein breites Spektrum von Arten von Bauaufgaben durch entsprechend angepasste Bauroboter abgearbeitet werden. Die derart ausgebildeten Bauroboter können somit besonders vielseitig einsetzbar sein. Der Bauroboter lässt sich einfach anpassen. Beispielsweise ist denkbar, lediglich das Funktionsmodul gegen ein anderes Funktionsmodul, das für eine andere Bauaufgabe ausgebildet ist, auszutauschen. Zur Herstellung von Baurobotern zur Ausführung unterschiedlicher Arten von Bauaufgaben können auf die gleiche Fahrplattform unterschiedliche Funktionsmodule montiert werden, sodass Herstellungskosten gesenkt werden können. Allgemein können Skaleneffekte genutzt werden.

Die Herstellung und Nutzung des Bauroboters können somit besonders kostengünstig erfolgen.

Das Funktionsmodul lässt sich relativ zur Fahrplattform verschieben und / oder verschwenken. Dies ermöglicht eine besonders kompakte Bauweise. Der Bauroboter lässt sich einfach warten. Sind Wartungsarbeiten an der Fahrplattform erforderlich, so lässt sich das Funktionsmodul verschieben und / oder verschwenken, bis ein Innenbereich der Fahrplattform von außen erreichbar ist. Die Fahrplattform kann dadurch besonders einfach von außen zugänglich sein.

Die Wartungsarbeiten können dadurch schneller abgeschlossen werden, als wenn der Bauroboter aufwendig in Einzelteile zerlegt werden müsste, um an in seinem Inneren befindliche Teile gelangen zu können. Dies kann besonders von Vorteil sein, wenn unterschiedliche Arten von Funktionsmodulen zum Einsatz kommen, da sich durch das Verschwenken oder Verschieben ein von der Art der Funktionsmodule unabhängige, standardisierte, einfach trainierbare Herangehensweise zur Ausführung von Wartungsarbeiten ergibt.

Nach Abschluss der beispielhaften Wartungsarbeiten kann das Funktionsmodul wieder in seine ursprüngliche Lage zurück verschoben und / oder verschwenkt werden. Beispielsweise kann das Funktionsmodul horizontal verschiebbar und / oder verschwenkbar sein. Dies kann auch dazu beitragen, dass der Bauroboter mit seinem Roboterarm Bauaufgaben an sonst nicht zugänglichen Stellen ausführen kann.

Das Funktionsmodul oder zumindest der Teil des Funktionsmoduls kann auf auf der Fahrplattform befindlichen Schienen angeordnet sein. Dann lässt sich das Funktionsmodul besonders einfach verschieben.

Die Fahrplattform kann ein Kettenfahrwerk, ein Räderfahrwerk und / oder ein Luftkissen aufweisen. Die Fahrplattform kann auch ein Fahrwerk aufweisen, auf das sich wahlweise Ketten oder Räder aufziehen lassen. Somit kann der Bauroboter auf unterschiedlichen Oberflächen eingesetzt werden. Ein Kettenfahrwerk kann sich beispielsweise für Einsätze im Rohbau und / oder im Tiefbau besonders eignen. Räder können beispielsweise für Einsätze auf empfindlichen Böden, beispielsweise auf Böden, auf denen bereits ein Estrich verlegt ist, eingesetzt werden. Ein Luftkissen kann beispielsweise vorteilhaft sein, wenn der Bauroboter insgesamt ein hohes Gewicht aufweist und sich dennoch mit geringem Kraftaufwand fortbewegen lassen soll. Wird das Luftkissen deaktiviert, kann der Bauroboter zudem stabil und beispielsweise rutschfest auf einem Untergrund aufliegen.

Die Fahrplattform kann wenigstens einen fernsteuerbaren Motor zur Fortbewegung der Fahrplattform aufweisen. Dann kann der Bauroboter bereits ohne Funktionsmodul als Transporter nutzbar sein. Die Fernsteuerung kann Funk-basiert sein. Alternativ oder ergänzend kann sie auch Internet-basiert sein. Beispielsweise kann der Bauroboter per Smartphone oder Tablet-Computer steuerbar sein. Denkbar ist insbesondere, dass sich die Fahrplattform autonom oder teilautonom fortbewegen kann.

Der Bauroboter kann einen Sicherheitscontroller zur Überwachung wenigstens einer Sicherheitsfunktion umfassen. Der Sicherheitscontroller kann als speicherprogrammierbare Steuerung ausgebildet sein. Der Sicherheitscontroller kann auf der Fahrplattform ausgebildet sein. Er kann zwischen Energiequellen und Aktuatoren des Bauroboters geschaltet sein. Somit kann er ausgebildet sein, Bewegungen des Bauroboters kontinuierlich zu überwachen. Die Einhaltung von sicherheitsrelevanten Rahmenbedingungen und Grenzbedingungen kann somit systematisch überwacht werden. Schäden oder Gefahrensituationen aufgrund von Fehlfunktionen einzelner Komponenten des Bauroboters lassen sich vermeiden.

Umfasst die Fahrplattform den Sicherheitscontroller, so kann der Sicherheitscontroller unabhängig von der mit dem Bauroboter genutzten Art des Funktionsmoduls arbeiten. Bei geeigneter Ausgestaltung des Bauroboters kann auf einen separaten Sicherheitscontroller, der auf dem Funktionsmodul ausgebildet ist, verzichtet werden.

Die Fahrplattform kann wenigstens einen Verzurrpunkt, vorzugsweise wenigstens vier Verzurrpunkte, aufweisen. Somit kann der Bauroboter unabhängig davon, welches Funktionsmodul montiert ist, mithilfe der Verzurrpunkte mit einem Kran verladen werden.

Denkbar ist auch, dass die Fahrplattform wenigstens einen, vorzugsweise wenigstens vier, optische Distanzmesser zur Überwachung einer Umgebung des mobilen Bauroboters aufweist. Die optischen Distanzmesser können beispielsweise einen oder mehrere LIDAR umfassen. Die optischen Distanzmesser können beispielsweise verwendet werden, um einen Sicherheitsbereich rund um den Bauroboter zu überwachen. Die üblicherweise einzuhaltenden Sicherheitsanforderungen entsprechen sehr niedrigen Fehlerwahrscheinlichkeiten bei der Klassifikation von Messdaten der Distanzmesser. Hier hat sich herausgestellt, dass diese Sicherheitsanforderungen am ehesten mittels optischen anstatt akustischen Distanzmessern erreichbar sind.

Das Funktionsmodul kann einen Steuerrechner zur Steuerung des Roboterarms aufweisen. Der Steuerrechner kann beispielsweise Wegbefehle geben, so dass die jeweilige Bauaufgabe mithilfe des Roboterarms ausgeführt werden kann. Der Bauroboter kann ferner einen Umsetzungsrechner aufweisen, der die Wegbefehle in konkrete Bewegungssequenzen des Roboterarms umsetzt.

Das Funktionsmodul kann einen Druckluftkompressor und / oder einen Drucklufttank aufweisen. Bei einer Vielzahl von Arten von Bauaufgaben wird Druckluft benötigt oder es kann zumindest Druckluft vorteilhaft verwendet werden. Beispielsweise kann Druckluft dazu genutzt werden, ein Bohrloch auszublasen, das ein Bohrbauroboter zuvor gebohrt hat.

Das Funktionsmodul kann ferner einen Unterdruckgenerator umfassen. Der Unterdruckgenerator kann beispielsweise eine Saugvorrichtung, insbesondere zur Staubabsaugung oder allgemein zur Oberflächenreinigung, sein. Der Unterdruck kann auch genutzt werden, um beispielsweise einen steuerbaren Saugnapf zu bedienen. Ein solcher Saugnapf kann genutzt werden, um den Bauroboter, insbesondere dessen Roboterarm, an einem externen Punkt, beispielsweise an einer Wand oder einer Decke, festzulegen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: einen Bauroboter in einer perspektivischen Darstellung von schräg hinten betrachtet,
- Fig. 2: eine Fahrplattform des Bauroboters in einer perspektivischen Ansicht von schräg hinten,
- Fig. 3: die Fahrplattform des Bauroboters in einer perspektivischen Ansicht von schräg vorne,
- Fig. 4: eine Wechselschachtanordnung sowie eine Batterie in perspektivischen Ansichten von schräg vorne,
- Fig. 5: die Wechselschachtanordnung in einer perspektivischen Ansicht von schräg hinten,
- Fig. 6: die Fahrplattform des Bauroboters in einer Seitenansicht,
- Fig. 7: die Fahrplattform des Bauroboters in einer teilgeschnittenen Ansicht mit Blick auf ein Funktionsmodul in einer perspektivischen Ansicht von schräg hinten, und
- Fig. 8: der Bauroboter in einer perspektivischen Ansicht von schräg vorne.

In der nachfolgenden Beschreibung der Figuren werden zur Erleichterung des Verständnisses der Erfindung für gleiche oder sich funktional entsprechende Elemente jeweils die gleichen Bezugszeichen verwendet.

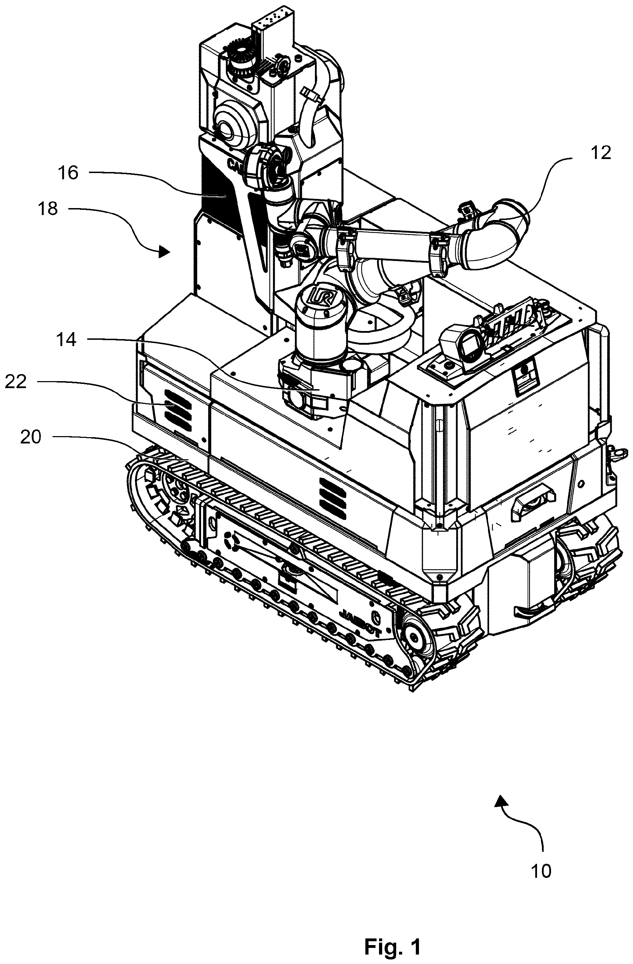

**Fig. 1** zeigt einen mobilen Bauroboter **10** zur Ausführung von Bauaufgaben an beispielsweise Wänden, Decken oder Böden. Erweist dazu einen Roboterarm **12** auf. Der Roboterarm 12 ist als mehrachsiger Roboterarm ausgebildet. Er weist wenigstens sechs Freiheitsgrade auf. Der Bauroboter 10 ist zum Einsatz bei Hochbau-Baustellen oder Tiefbau-Baustellen ausgerichtet.

Je nach auszuführender Bauaufgabe ist ein Endeffektor **14** des Roboterarms 12 mit unterschiedlichen elektrischen Werkzeugmaschinen bestückt. Im vorliegenden Ausführungsbeispiel ist der Endeffektor 14 mit einer Schleifmaschine bestückt, um Schleifarbeiten auszuführen. In alternativen Ausführungen kann der Endeffektor 14 auch mit beispielsweise einer Bohrhammermaschine, einer Meißelmaschine oder einer Sägemaschine bestückt sein, um Bohrarbeiten, Abbrucharbeiten beziehungsweise Trennarbeiten auszuführen.

Der Roboterarm 12 weist ferner eine Hubvorrichtung **16** auf, die seine Reichweite, insbesondere in vertikaler Richtung, erweitert. Der Roboterarm 12 ist am Rand einer Vorderseite **18** des Bauroboters 10 angeordnet, sodass der Bauroboter 10 an dicht an Wände oder Hindernisse heranreichenden Positionen Bauarbeiten ausführen kann.

Der Bauroboter 10 weist eine Breite von weniger als 80cm, insbesondere eine Breite von 76 cm, auf, um beispielsweise bei Hochbau-Baustellen auch durch schmale Türöffnungen, wie beispielsweise Türöffnungen von Bürozimmern hindurchzupassen.

Er ist weniger als 140 cm, insbesondere 130 cm, lang. Eine solche Länge hat sich als vorteilhaft herausgestellt, um beispielsweise auch in üblichen Treppenhäusern und Winkeln von Gängen ausreichend rangieren zu können. Allgemein ist der Bauroboter 10 durch sein kurze Länge und seine schmale Breite besonders wendig.

Der Bauroboter 10 weist zur Fortbewegung ferner eine Fahrplattform **20** auf, auf der ein Funktionsmodul **22** angeordnet ist.

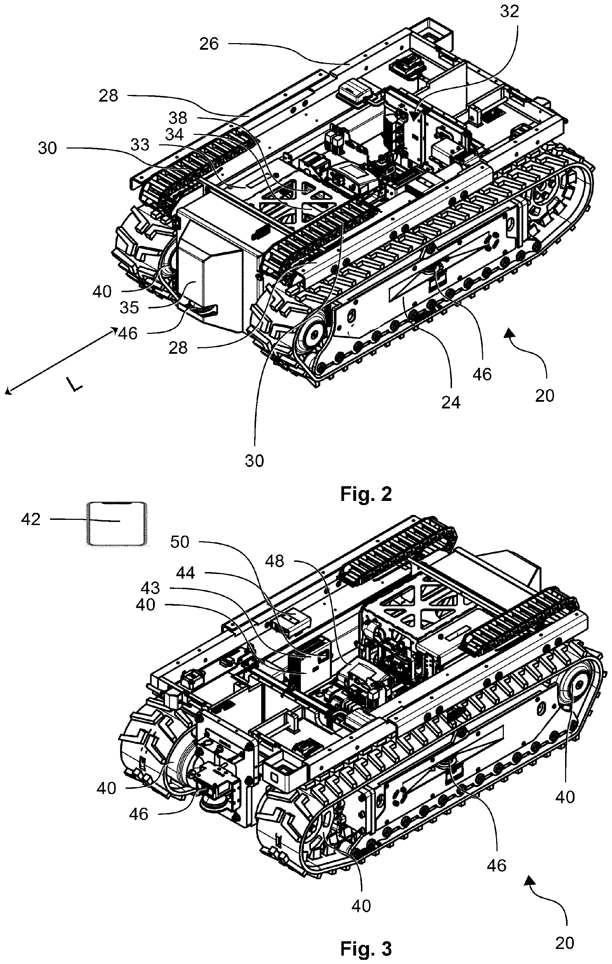

**Fig. 2** zeigt eine perspektivische Detailansicht der Fahrplattform 20. Die Fahrplattform 20 weist ein Kettenfahrwerk **24** auf.

Auf einem Rahmen **26** der Fahrplattform 20 sind Schienen **28** ausgebildet, auf denen sich das Funktionsmodul 22 (siehe Fig. 1) entlang einer Längsrichtung L des Bauroboters 10, insbesondere entsprechenden Freiraum vorausgesetzt nach vorne oder nach hinten, verschieben lässt.

Dazu weist das Funktionsmodul 22 an seiner Unterseite Rollen auf, die sich mittels eines Rastmechanismus in die Schienen 28 einklinken und an diesen festlegen lassen. Alle Leitungen wie beispielsweise Kabel oder Schläuche, die Elemente der Fahrplattform 20 mit Elementen des Funktionsmoduls 22 verbinden, sind mit Steckkontakten versehen, sodass sich insgesamt das Funktionsmodul 22 werkzeuglos auf der Fahrplattform 20 montieren beziehungsweise demontieren lässt.

Um das Funktionsmodul 22 entlang der Schienen 28 verschieben zu können, sind die Leitungen zum Funktionsmodul 22 in beweglichen Kabelführungen **30** geführt.

Durch Verschieben des Funktionsmoduls 22 nach außen lässt sich ein Innenbereich **32** der Fahrplattform 20 von außen erreichen.

Im Innenbereich 32 befindet sich eine Wechselschachtanordnung **33** mit vier hot swappingfähigen Wechselschächten **34,** von denen in Fig. 2 aus Darstellungsgründen lediglich einer der Wechselschächte 34 mit einem Bezugszeichen versehen ist. Die Wechselschachtanordnung 33 weist eine schwenkbare Abdeckung **35** als Schutz gegen äußere Einflüsse auf. Nach Verschwenken der Abdeckung 35 sind die Wechselschächte 34, beispielsweise für einen Batteriewechsel, von außen werkzeuglos zugänglich.

Anhand von **Fig. 2** und **Fig. 3** ist ferner zu erkennen, dass die Fahrplattform 20 vier Radmotoren **40** zur Fortbewegung der Fahrplattform 20 und damit des Bauroboters 10 (siehe Fig. 1) aufweist. Die Fahrplattform 20 und insbesondere die Radmotoren 40 lassen sich über eine Fernbedienung **42** steuern. Die Fernbedienung 42 ist als tragbarer Internet-fähiger Rechner, insbesondere in Form eines mit dem Internet verbindbaren Tablet Computers, ausgebildet. Die Fernbedienung 42 ist ferner eingerichtet, eine direkte Funkverbindung zum Bauroboter 10 aufzubauen, sodass sie diesen auch steuern kann, selbst wenn keine Internetverbindung verfügbar ist. Die Fahrplattform 20 weist einen Steuerrechner **43** mit einer - in Fig. 3 lediglich schematisch dargestellten - Funkschnittstelle **44** in Form einer kombinierten Wifi- und 5G-Funkschnittstelle, auf. Über die Funkschnittstelle 44 kann der Steuerrechner 43 eine Internetverbindung aufbauen, sodass er unter anderem Steuerbefehle der Fernbedienung 42 empfangen sowie weitere Daten, z. B. an einen entfernten, cloud-basierten Rechner, empfangen oder senden kann.

An Seiten, insbesondere allen vier Seiten, der Fahrplattform 20 sind ferner optische Distanzmesser **46** in Form von LIDAR angeordnet, sodass eine unmittelbare Umgebung rundum den Fahrplattform 20 ohne tote Winkel überwacht werden kann. Somit können mit besonders hoher Sicherheit Personen-relevante Bewegungen des Bauroboters 10, insbesondere der Fahrplattform 20 sowie auch des Funktionsmoduls 22, überwacht werden. Die Distanzmesser 46 können zum Personenschutz und / oder zur Absturzsicherung dienen. Mit Hilfe der optischen Distanzmesser 46 lässt sich eine Fehlerwahrscheinlichkeit von weniger als 1 : 1 000 000, insbesondere von weniger als 1 : 5 000 000 erreichen.

Im Innenbereich 32 befindet sich ferner ein Sicherheitscontroller **48** in Form einer speicherprogrammierbaren Steuerung, allgemein auch in Englisch als "programmable logic controller", abgekürzt "PLC", bezeichnet. Auf die Eingänge des Sicherheitscontrollers 48 sind Signale aller an der Fahrplattform 20 befindlichen Sensoren sowie von den Wechselschächten 34 kommende Versorgungsleitungen geschaltet. Die Ausgänge des Sicherheitscontrollers 48 führen zu Aktoren der Fahrplattform 20 als auch über die Kabelführungen 30 zu dem Funktionsmodul 22 (siehe Fig. 1). Dabei können unter "Sensoren" alle Vorrichtungen verstanden werden, die Messdaten erfassen, wie beispielsweise die vorangehend genannten optischen Distanzmesser, an den Wechselschächten 34 ausgebildete Strom- und Spannungssensoren, an den Radmotoren 40 befindliche Bewegungssensoren, Positionssensoren des Roboterarms 12 oder dergleichen verstanden werden. Unter "Aktoren" können alle Vorrichtungen verstanden werden, die die an den Eingängen ankommende Daten und die elektrischen Energie weiter nutzen. Aktoren sind beispielsweise die Radmotoren 40, Stellmotoren des Roboterarms 12, Motoren des Funktionsmoduls 22, der Steuerrechner 43, oder dergleichen.

Im Innenraum 32 befindet sich ferner eine mit dem Steuerrechner 43 inertiale Messeinheit **50,** englisch inertial measurement unit, abgekürzt: IMU. Die IMU 50 wird unter anderem vom Steuerrechner 43 sowie dem Sicherheitscontroller 48 genutzt, um Bewegungsdaten der Fahrplattform 20 zu sammeln, auszuwerten und zu überwachen. Insbesondere kann durch Überwachen der Neigung, der Drehrichtung und der Geschwindigkeit der Fahrplattform 20 und ggf. Gegensteuern des Roboterarms 12 der Bauroboter 10 gegen unbeabsichtigtes Umstürzen gesichert werden. Neigungsdaten können ferner genutzt werden, um neigungsbedingte Abweichungen des Roboterarms 12 von zu erreichenden Zielpositionen zu kompensieren.

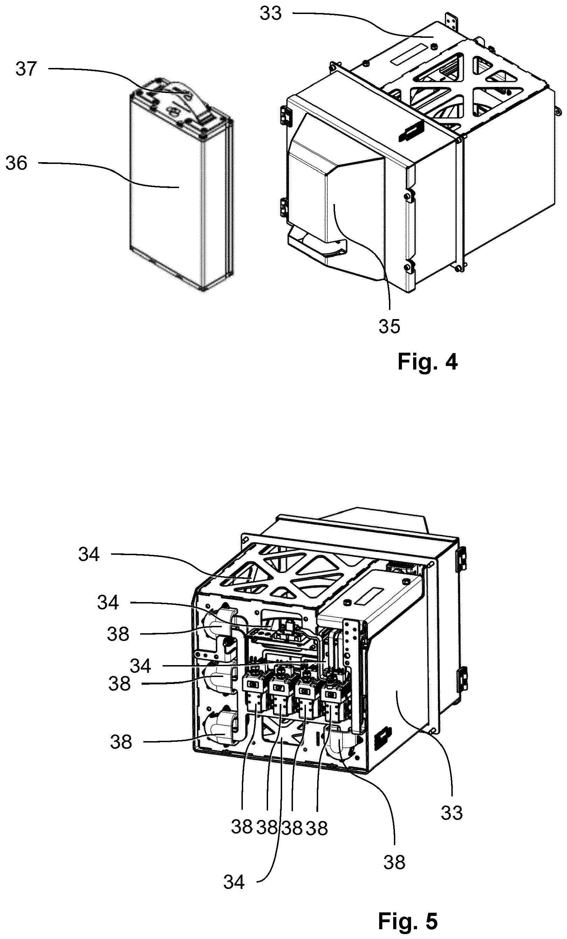

**Fig. 4** zeigt eine Wechselschachtanordnung 33 sowie eine Batterie **36** in perspektivischen Ansichten von schräg vorne. **Fig. 5** zeigt die Wechselschachtanordnung 33 in einer perspektivischen Ansicht von schräg hinten.

Die Wechselschachtanordnung 33 weist vier Wechselschächte 34 auf. Die Wechselschächte 34 dienen zur Aufnahme von jeweils einer Batterie, beispielsweise entsprechend der Art der Batterie 36. Die Batterien 36 dienen zum elektrischen Antrieb des Bauroboters 10 (siehe Fig. 1), insbesondere des Roboterarms 12 (siehe Fig. 1), der Fahrplattform 20 und des Funktionsmoduls 22.

Die Batterie 36 ist eine Lithium-basierte Batterie, beispielsweise auf Basis von LiFePO₄ oder Li-NMC. Denkbar ist auch, dass die Batterie Na-basiert ist. Die Batterie 36 weist eine Kapazität von 2,5 kWh. Sie weist ein Gewicht von 16 kg auf. Allgemein kann die Batterie 36 vorzugsweise weniger als 25 kg, insbesondere von weniger als 20 kg, aufweisen, sodass sie von einem Benutzer des Bauroboters 10 ohne weitere Hilfsmittel transportiert, insbesondere getragen, werden kann. Dazu weist die Batterie 36 einen Griff **37** auf.

Mit mehreren Exemplaren der Batterie 36 kann somit durch die Wechselschachtanordnung 33 eine Gesamtkapazität von wenigstens 10 kWh, insbesondere von wenigstens 20kWh, bereitgestellt werden. Somit kann der Bauroboter selbst ohne Batteriewechsel und unter Vermeidung von Tiefentladungen eine Dauerleistung von wenigstens 1 kW, insbesondere von wenigstens 2 kW, über wenigstens 8 h nutzen. Dies kann vorteilhaft für besonders weit abgelegene Baustellen sein, auf denen ansonsten keine Ladestation oder dergleichen zum Aufladen der Batterien 36 verfügbar ist.

Die Wechselschächte 34 weisen Energieschnittstellen **38** mit Buchsen zum Anschluss der Batterien 36 auf. Die Buchsen befinden sich innenseitig an Rückseiten der Wechselschächte 34, sodass sich unterschiedliche Arten von Batterien 36, insbesondere unterschiedlicher Größen, Nennspannungen oder Kapazitäten, in die Wechselschächte 34 einsetzen lassen. Die Energieschnittstellen 38 dienen zur Energieversorgung des gesamten Bauroboters 10, also unter anderem der Fahrplattform 20, des Roboterarms 12 und des Funktionsmoduls 22. Sie umfassen DC/DC-Wandler und DC/AC-Wandler, um die je nach Art der Batterien 36 bereitgestellten Nennspannungen und Nennströme in unterschiedliche Energiemodi, insbesondere je nach Art des Funktionsmoduls 22 sowie je nach Bedarf des Roboterarms 12, insbesondere des Endeffektors 14 (siehe Fig. 1), umzuwandeln. Auch können dadurch unterschiedliche Ladezustände der Batterien 36 (siehe Fig. 4) und damit einhergehende Spannungen ausgeglichen werden. Auch ein Lastmanagement ist damit einhergehend installiert. Insbesondere können Gleichspannungen von 24 V und 48 V sowie eine Wechselspannung von 230 V bereitgestellt werden.

Die von den Batterien 36 bereitgestellte elektrische Energie wird zum Schutz vor Überlastungen über Schütze **39** geführt.

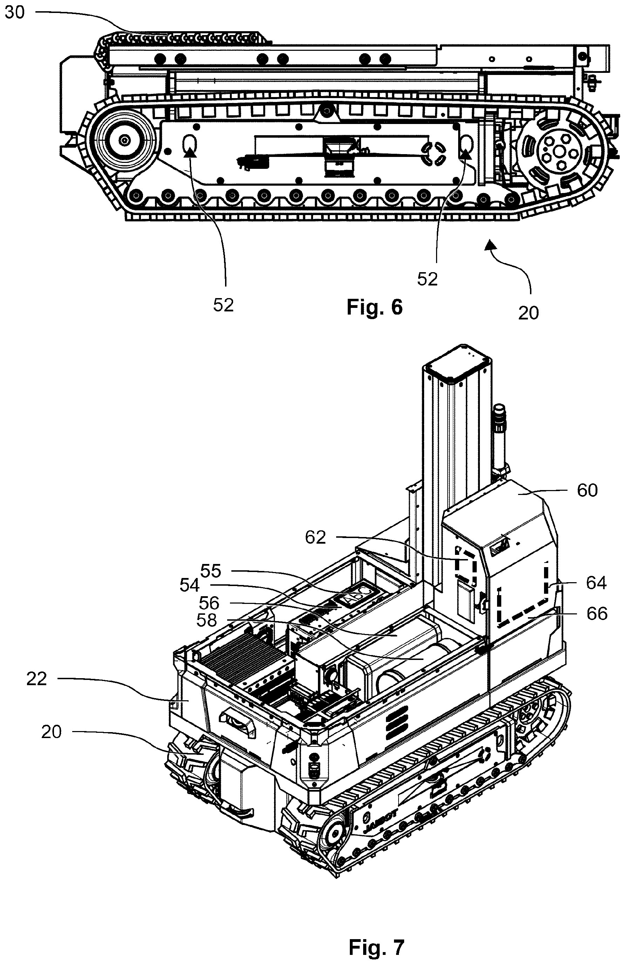

Wie in **Fig. 6** dargestellt, weist die Fahrplattform 20 an ihren Längsseiten jeweils zwei, also insgesamt wenigstens vier, Verzurrpunkte **52** auf, an denen Tragseile oder dergleichen zur Kranverladung angebracht werden können. Die Verzurrpunkte 52 sind als Ausnehmungen in einer Seitenwand der Fahrplattform 20 ausgebildet, sodass sie nicht von der übrigen Fahrplattform 20 abstehen, sodass Verletzungsgefahren durch die Verzurrpunkte 52 minimiert sind.

Anhand der Seitenansicht gemäß Fig. 6 ist auch zu erkennen, dass die Fahrplattform 20, abgesehen von den beweglichen Kabelführungen 30, oberseitig eben ausgebildet ist.

**Fig. 7** zeigt in einer teilgeschnittenen Ansicht das auf der Fahrplattform 20 angeordnete Funktionsmodul 22. Im Funktionsmodul 22 befindet sich ein Steuerrechner **54** zur Steuerung des Roboterarms 12. Auf dem Steuerrechner 54 befindet sich spezifisch zur Ausführung der jeweiligen Art von Bauaufgaben, für die der Bauroboter 10 vorgesehen ist, ausgebildeter Programmcode **55.** Der Programmcode 55 ist in Fig. 7 lediglich schematisch dargestellt. Er kann auch eine Programmcodekomponente umfassen, die den Bauroboter 10 bei Bedarf steuert, eine bis zu einem bestimmten Ladezustand entladene Batterie 36 (siehe Fig. 4) gegen eine aufgeladene Batterie 36 zu tauschen und die entladene Batterie 36 an ein externes Ladegerät anzuschließen.

Zur Erzeugung, Speicherung und dosierten Abgabe von Druckluft weist das Funktionsmodul 22 ferner einen Druckluftkompressor **56** und einen Drucklufttank **58** auf. Die Druckluft wird über Leitungen zum Roboterarm 12 geführt und steht dort am Endeffektor 14 (siehe Fig. 1) zur Verfügung. Ferner weist das Funktionsmodul 22 in einem Gehäuseteil **60** einen lediglich schematisch dargestellten Unterdruckgenerator **62** in Form einer Staubabsaugung auf. Ein ebenfalls lediglich schematisch dargestellter Staubsammelbehälter **64** befindet sich hinter einer Abdeckklappe **66.** Er ist mittels eines Hubrastmechanismus werkzeuglos entnehmbar.

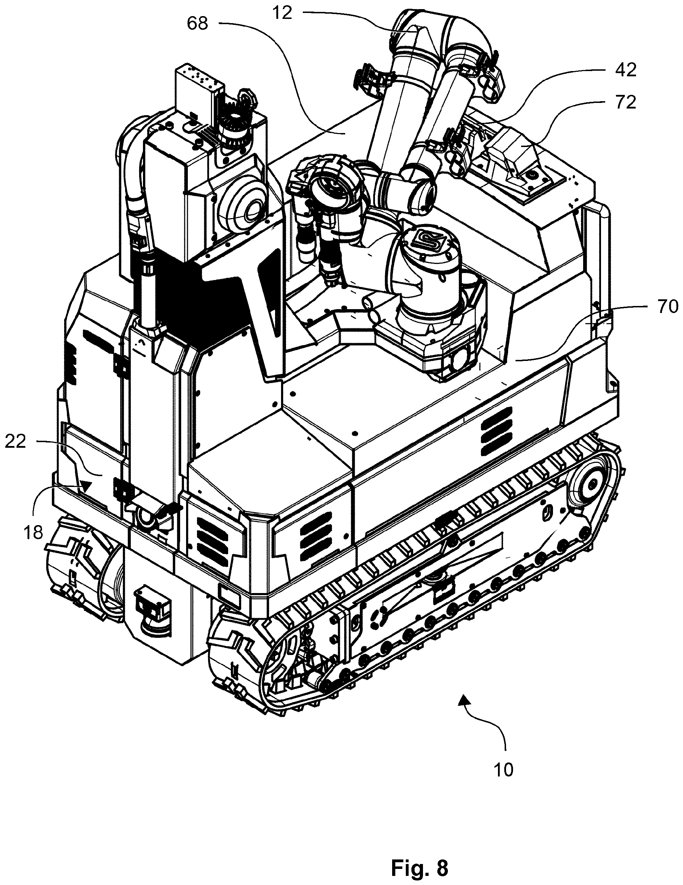

**Fig. 8** zeigt eine perspektivische Ansicht des Bauroboters 10. Zu erkennen ist, dass auf dem Funktionsmodul 22 ein Applikationsmodul **68** angeordnet ist. Das Applikationsmodul 68 deckt das Funktionsmodul 22 ab. Über das Applikationsmodul 68 werden für die jeweilige Art von Bauaufgaben, für die der Bauroboter 10 ausgebildet ist, erforderliche zusätzliche Elemente bereitgestellt. Insbesondere gibt es mehrere Ablagemöglichkeiten, von denen beispielhaft ein Schubfach **70** mit einem Bezugszeichen markiert ist. An den Ablagemöglichkeiten, insbesondere den Schubfächern 70, können beispielsweise für eine genaue Lokalisierung des Bauroboters 10 eine Totalstation abgelegt sein. Verbrauchsmaterialien, beispielsweise Zubehör wie beispielsweise Gesteinsbohrer, Schleifmaterial oder Sägeblätter oder zu verarbeitende Materialien wie beispielsweise Anker, Schrauben, Dübel, können an Ablagemöglichkeiten an der Hubvorrichtung 16 und / oder auf dem Applikationsmodul 68 bevorratet sein.

Weiter befindet sich, insbesondere aufgrund der guten Erreichbarkeit, die Fernbedienung 42 auf dem Applikationsmodul 68. Die Fernbedienung 42 ruht auf einer Halterung und lässt sich werkzeuglos vom Applikationsmodul 68 abnehmen.

Weiter befindet sich auf dem Applikationsmodul 68 ein Notfallknopf **72,** der bei Betätigung Bewegungen des Bauroboters 10 schnellstmöglich stoppt.

Aus Fig. 8 ist ferner erkennbar, dass die Hubvorrichtung 16 von der Vorderseite 18 des Bauroboters 10 zugänglich ist. Wartungsarbeiten oder gegebenenfalls ein Austausch des Roboterarms 12 oder eines Teils desselben, beispielsweise der Hubvorrichtung 16, werden dadurch vereinfacht.

### Bezugszeichenliste

- 10: Bauroboter
- 12: Roboterarm
- 14: Endeffektor
- 16: Hubvorrichtung
- 18: Vorderseite
- 20: Fahrplattform
- 22: Funktionsmodul
- 24: Kettenfahrwerk
- 26: Rahmen
- 28: Schiene
- 30: Kabelführung
- 32: Innenbereich
- 33: Wechselschachtanordnung
- 34: Wechselschacht
- 35: Abdeckung
- 36: Batterie
- 37: Griff
- 38: Energieschnittstelle
- 39: Schutz
- 40: Radmotor
- 42: Fernbedienung
- 43: Steuerrechner
- 44: Funkschnittstelle
- 46: Distanzmesser
- 48: Sicherheitscontroller
- 50: IMU
- 52: Verzurrpunkt
- 54: Steuerrechner
- 55: Programmcode
- 56: Druckluftkompressor
- 58: Drucklufttank
- 60: Gehäuseteil
- 62: Unterdruckgenerator
- 64: Staubsammelbehälter
- 66: Abdeckklappe
- 68: Applikationsmodul
- 70: Schubfach
- 72: Notfallknopf

## Patentansprüche

1. **Bauroboter (10)** zur Ausführung wenigstens einer Art von Bauaufgaben, beispielsweise Oberflächenbehandlungen, Schneidarbeiten, Bohrarbeiten, Abbrucharbeiten, insbesondere im Hochbau und / oder im Tiefbau, umfassend eine Fahrplattform (20), einen Roboterarm (12) und ein Funktionsmodul (22), wobei sich zumindest ein Teil des Funktionsmoduls (22) relativ zur Fahrplattform (20) verschieben und / oder verschwenken lässt.

2. Bauroboter (10) nach einem der vorhergehenden Ansprüche, **dadurch gekennzeichnet, dass** das Funktionsmodul (22) oder zumindest der Teil des Funktionsmoduls (22) auf auf der Fahrplattform (20) befindlichen Schienen (28) angeordnet ist.

3. Bauroboter (10) nach einem der vorhergehenden Ansprüche, **dadurch gekennzeichnet, dass** die Fahrplattform (20) ein Kettenfahrwerk (24), ein Räderfahrwerk und / oder ein Luftkissen aufweist.

4. Bauroboter (10) nach einem der vorhergehenden Ansprüche, **dadurch gekennzeichnet, dass** die Fahrplattform (20) wenigstens einen fernsteuerbaren Motor (40) zur Fortbewegung der Fahrplattform (20) aufweist.

5. Bauroboter (10) nach einem der vorhergehenden Ansprüche, **dadurch gekennzeichnet, dass** der Bauroboter (10) einen Sicherheitscontroller (48) zur Überwachung wenigstens einer Sicherheitsfunktion umfasst.

6. Bauroboter (10) nach einem der vorhergehenden Ansprüche, **dadurch gekennzeichnet, dass** die Fahrplattform (20) den Sicherheitscontroller (48) umfasst.

7. Bauroboter (10) nach einem der vorhergehenden Ansprüche, **dadurch gekennzeichnet, dass** die Fahrplattform (20) wenigstens einen Verzurrpunkt (52), vorzugsweise wenigstens vier Verzurrpunkte (52), aufweist.

8. Bauroboter (10) nach einem der vorhergehenden Ansprüche, **dadurch gekennzeichnet, dass** die Fahrplattform (20) wenigstens einen, vorzugsweise wenigstens vier, optische Distanzmesser (46) zur Überwachung einer Umgebung des mobilen Bauroboters (10) aufweist.

9. Bauroboter (10) nach einem der vorhergehenden Ansprüche, **dadurch gekennzeichnet, dass** das Funktionsmodul (22) einen Steuerrechner (43, 54) zur Steuerung des Roboterarms (12) aufweist.

10. Bauroboter (10) nach einem der vorhergehenden Ansprüche, **dadurch gekennzeichnet, dass** das Funktionsmodul (22) einen Druckluftkompressor (56) und / oder einen Drucklufttank (58) aufweist.

11. Bauroboter (10) nach einem der vorhergehenden Ansprüche, **dadurch gekennzeichnet, dass** das Funktionsmodul (22) einen Unterdruckgenerator (62) umfasst.
